# EUROPÄISCHE PATENTSCHRIFT

(11) **EP 0 514 951 B1**
(45) Veröffentlichungstag und Bekanntmachung des Hinweises auf die Patenterteilung: **05.04.1995**
(21) Anmeldenummer: 92113309.6
(22) Anmeldetag: 11.10.1988
(51) Int. Cl.: B31B 3/74, B31B 3/02, B31B 19/74, B31B 19/02

(54) **Verfahren und Vorrichtung zum Herstellen und Fördern von Verpackungs-Zuschnitten**
Method and device for fabricating and conveying packaging blanks
Procédé et dispositif pour fabriquer et transporter des découpes d'emballage

(30) Priorität: 22.10.1987 DE 3735675
(43) Veröffentlichungstag der Anmeldung: 25.11.1992
(62) Teilanmeldung aus: 88116806.6
(73) Patentinhaber: Focke & Co. (GmbH & Co.), 27283 Verden (DE)
(72) Erfinder: Focke, Heinz, D-27283 Verden (DE); Liedtke, Kurt, D-27283 Verden (DE)
(74) Vertreter: Bolte, Erich, Dipl.-Ing.

(56) Entgegenhaltungen:
- EP-A- 0 291 692
- DE-A- 3 205 801
- DE-A- 3 500 547
- DE-A- 3 602 210
- DE-B- 1 929 600
- DE-C- 969 725
- FR-A- 1 293 924
- US-A- 3 658 220
- US-A- 4 331 434

## Beschreibung

Die Erfindung betrifft ein Verfahren zum Herstellen von Packungs -Zuschnitten durch Abreißen von einer Materialbahn und Zuführen derselben zu einem Faltrevolver einer Verpackungsmaschine, wobei die Zuschnitte nacheinander durch Zugkraft von der Materialbahn in Längsrichtung derselben abgerissen werden und die Materialbahn mit Perforation oder dergleichen zur Definition der Zuschnitte versehen ist. Weiterhin bezieht sich die Erfindung auf eine Vorrichtung zum Herstellen von Packungs-Zuschnitten, insbesondere zur Durchführung des Verfahrens.

Die prioitätsältere EP-A-0 291 692 befaßt sich mit der Herstellung und Handhabung von Zuschnitten aus einem dünnen Karton für Zigaretten-Packungen des Typs Klappschachtel. Die verhältnismäßig komplexen Zuschnitte sind mit der Längserstreckung quer zur Längsrichtung der Materialbahn gerichtet und in ausgesuchten Bereichen über Restverbindungen miteinander verbunden. Zur Verarbeitung werden die Zuschnitte nacheinander von der Materialbahn abgerissen und einem Zigaretten-Magazin zugeführt.

In diesem wird ein Vorrat an Zuschnitten durch Stapeln gebildet. Zur Herstellung von Verpackungen werden die Zuschnitte einzeln dem Magazin an der Unterseite entnommen.

Aus der US-A-36 58 220 ist eine zum Trennen vorbereitete Materialbahn bekannt, die in Querrichtung drei Zuschnitte nebeneinander und in Längsrichtung beliebig viele aufeinanderfolgende Zuschnitte aufweist. Zum Abtrennen der einzelnen Zuschnitte werden zunächst Dreiersätze voneinander getrennt, so daß drei quer zur Längsrichtung der Materialbahn nebeneinanderliegende Zuschnitte noch miteinander verbunden sind. Anschließend werden die Dreiersätze in sich aufgetrennt. Dies erfolgt während einer Förderung in Längsrichtung einer Förderbahn. Letztere zerteilt sich schließlich in drei gegeneinander divergierende Teilbahnen.

Die Erfindung befaßt sich mit der gleichzeitigen Verarbeitung von zwei oder mehr Zuschnitten. Die zu lösende Aufgabe besteht darin, Verfahren und Vorrichtung vorzuschlagen, durch die das Herstellen mehrerer Zuschnitte besonders einfach und schnell möglich ist. Insbesondere soll eine anschließende, zeitgleiche Querabförderung der Zuschnitte möglich sein.

Zur Lösung dieser Aufgabe weist das erfindungsgemäße Verfahren folgende Merkmale auf:
- zum gleichzeitigen Herstellen von mehreren, insbesondere zwei Zuschnitten, werden diese als Einheit von der Materialbahn abgetrennt, wobei die einzelnen Zuschnitte der Einheit in Längsrichtung der Materialbahn aufeinanderfolgen,
- danach wird die Einheit in Längsrichtung der Materialbahn weiter gefördert und schließlich in die einzelnen Zuschnitte getrennt. Nach dem letzten Trennen liegen somit zwei einzelne Zuschnitte vor, die zugleich quer abgefördert werden können.

Die erfindungsgemäße Vorrichtung weist folgende Merkmale auf:
- an ein Paar von Zugwalzen zum Vorschub der Materialbahn schließt ein mit höherer Geschwindigkeit umlaufendes erstes Paar von Reißwalzen zum Abreißen einer aus zwei in Längsrichtung der Materialbahn aufeinanderfolgenden Zuschnitten bestehenden Einheit an,
- an das erste Paar Reißwalzen schließen Förderwalzen zum Weitertransport der Einheit in Längsrichtung der Materialbahn an,
- an die Förderwalzen schließt ein weiteres Trennaggregat an, das jede Einheit in einzelne Zuschnitte zertrennt und zwar wiederum in Längsrichtung der Materialbahn.

Die Vorrichtung ist für die Vorbereitung von zwei oder mehr gleichzeitig zu verarbeitenden Zuschnitten eingerichtet. In diesem Falle wird erfindungsgemäß durch das erste Paar Zugwalzen eine Einheit von zwei oder mehr Zuschnitten von der Materialbahn abgerissen und einer nachfolgenden Trennstation mit Förderwalzen einerseits und einem zweiten Paar Reißwalzen andererseits, welches mit nochmals höherer Umfangsgeschwindigkeit umläuft zum Auseinanderreißen der Einheit in die einzelnen Zuschnitte, zugeführt. Die zweite Trennstation bzw. das zweite Reißwalzenpaar ist dabei vorzugsweise im Bereich der Zuschnittbahn angeordnet, so daß nach dem Trennen der Einheit in die einzelnen Zuschnitte diese unmittelbar anschließend in Querrichtung abgefördert werden können.

In ebenfalls besonderer Weise sind bei der Erfindung die Reißwalzen ausgebildet. Wenigstens eine (obere) Reißwalze ist so gestaltet, daß sie nur während einer vorgegebenen Phase in Eingriff bzw. Berührung mit der Materialbahn bzw. den Zuschnitten gelangt. Während der übrigen Phase einer Umdrehung wird gegenüber der anderen Reißwalze des Reißwalzenpaares ein Spalt gebildet, der den Durchtritt der Materialbahn bzw. der Zuschnitte zwischen den Reißwalzen ohne Ausübung einer Zugkraft ermöglicht. Vorzugsweise ist die betreffende Reißwalze mit einem in Radialrichtung als Erhöhung wirkenden Reißsegment versehen, welches während der Phase der Ausübung der Zug- bzw. Reißkraft mit der Materialbahn bzw. dem Zuschnitt in Berührung kommt.

Weitere Merkmale der Erfindung beziehen sich auf die Ausgestaltung der Reißaggregate sowie auf die Organe für den Transport der Materialbahn und der (einzelnen) Zuschnitte.

Ein Ausführungsbeispiel der Erfindung wird nachfolgend anhand der Zeichnungen näher erläutert. Es zeigt:
- Fig. 1: eine Verpackungsmaschine im schematischen Grundriß mit Einrichtungen für die Herstellung und Handhabung von Zuschnitten,
- Fig. 2: einen Abschnitt einer Materialbahn für Zuschnitte im Grundriß im Bereich der Herstellung der einzelnen Zuschnitte,
- Fig. 3: den schematischen Ablauf der Herstellung von Zuschnitten durch Abreißen von einer Materialbahn in Seitenansicht,
- Fig. 4: Organe zum Herstellen von einzelnen Zuschnitten durch Abreißen (Trennstation) in Seitenansicht,
- Fig. 5: einen ergänzten Grundriß zu der Trennstation gemäß Fig 4,
- Fig. 6: eine Einzelheit im Bereich der Trennstation in Queransicht zu Fig. 5, in vergrößertem Maßstab.

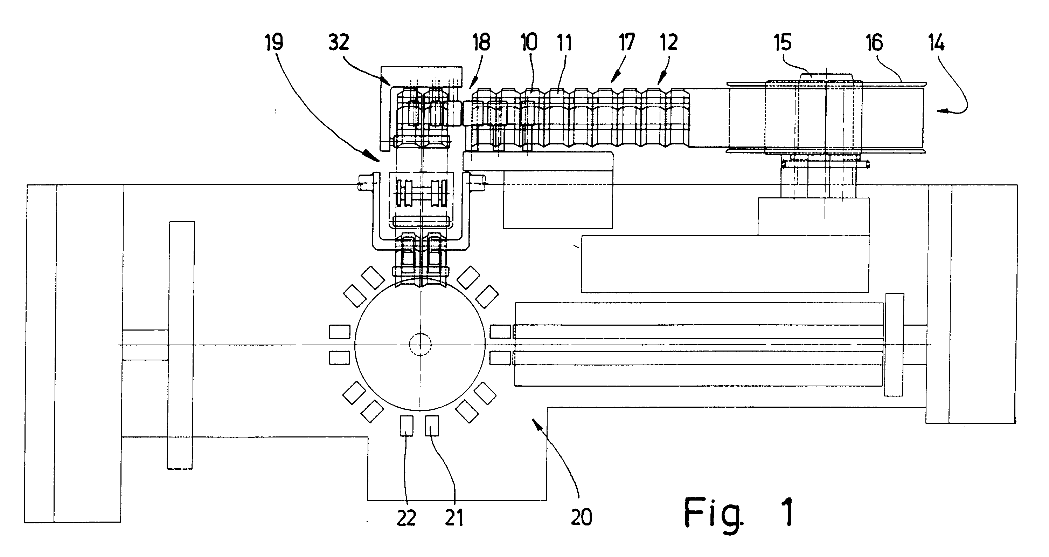

Die in Fig. 1 schematisch dargestellte Verpackungsmaschine dient zur Herstellung von (Zigaretten-)Packungen aus dünnem Karton, und zwar von Klappschachteln (Hinge-Lid-Packungen). Die Besonderheit besteht darin, daß Zuschnitte 10, 11 für die Herstellung der Klappschachtel nicht einzeln vorgefertigt der Verpackungsmaschine zugeführt werden, sondern als Materialbahn 12. Diese besteht aus fortlaufend aneinandergereihten, vorgeformten Zuschnitten 10, 11, die lediglich durch Restverbindungen 13 zu der Materialbahn 12 verbunden sind. Die Zuschnitte 10, 11 sind mit ihrer Längserstreckung quer zur Längsrichtung der Materialbahn 12 orientiert. Vorzugsweise sind Zuschnitte 10, 11 und Materialbahn 12 nach Maßgabe der DE-Patentanmeldung P 37 16 897.5 ausgebildet.

Die Materialbahn 12 wird als gewickelte Bobine 14 der Verpackungsmaschine zugestellt. Diese ist auf ihrer Rückseite mit einem nach rückwärts gerichteten Tragzapfen 15 versehen, auf den die Bobine 14 mit einer Bobinenrolle 16 aufgesetzt wird. Die Materialbahn 12 wird (fortlaufend) von der Bobine 14 abgezogen. Ein Abschnitt der Materialbahn 12 verläuft längs einer Förderbahn 17 an der Rückseite der Verpackungsmaschine, etwa parallel zu einer (gedachten) Längsmittelebene derselben.

Im Bereich einer Trennstation 18 werden einzelne Zuschnitte 10, 11 von der Materialbahn 12 abgetrennt, und zwar durch Reißen. Die einzelnen Zuschnitte 10, 11 werden sodann längs einer Zuschnittbahn 19 - quer zur Förderbahn 17 - in Richtung zur Vorderseite der Verpackungsmaschine einem Faltrevolver 20 zugeführt. Die Zuschnittbahn 19 endet oberhalb einer Randes des Faltrevolvers 20, nämlich oberhalb von Taschen 21, 22 desselben. In diese werden die Zuschnitte 10, 11 von oben her eingedrückt.

Bei dem vorliegenden Ausführungsbeispiel ist der Faltrevolver 20 mit jeweils zwei parallel nebeneinanderliegenden Taschen 21, 22 ausgerüstet, die gleichzeitig mit je einem Zuschnitt 10, 11 beschickt werden. Die Leistung der Verpackungsmaschine wird dadurch verdoppelt. Demgemäß werden jeweils zwei Zuschnitte 10, 11 von der Materialbahn 12 und voneinander getrennt und parallel längs der Zuschnittbahn 19 dem Faltrevolver 20 zugefördert. Die beiden Zuschnitte 10, 11 werden gleichzeitig in entsprechend angeordnete Taschen 21, 22 eingeführt.

Beim Abtrennen der Zuschnitte 10, 11 von der Materialbahn 12 wird so vorgegangen, daß zunächst eine Einheit 23 aus zwei noch miteinander verbundenen Zuschnitten 10, 11 von der Materialbahn 12 abgetrennt, nämlich abgerissen wird. Die Einheit 23 wird sodann auf Abstand zur Materialbahn 12 gefördert. Danach erfolgt die Trennung der Einheit 23 in die beiden einzelnen Zuschnitte 10, 11.

Das Abreißen der Einheit 23 und das Trennen derselben erfolgt durch Unterschiede in der Fördergeschwindigkeit. Zu diesem Zweck sind im Bereich der Trennstation 18 verschiedenen Paare von Transportwalzen und Reißwalzen in besonderer Weise miteinander kombiniert.

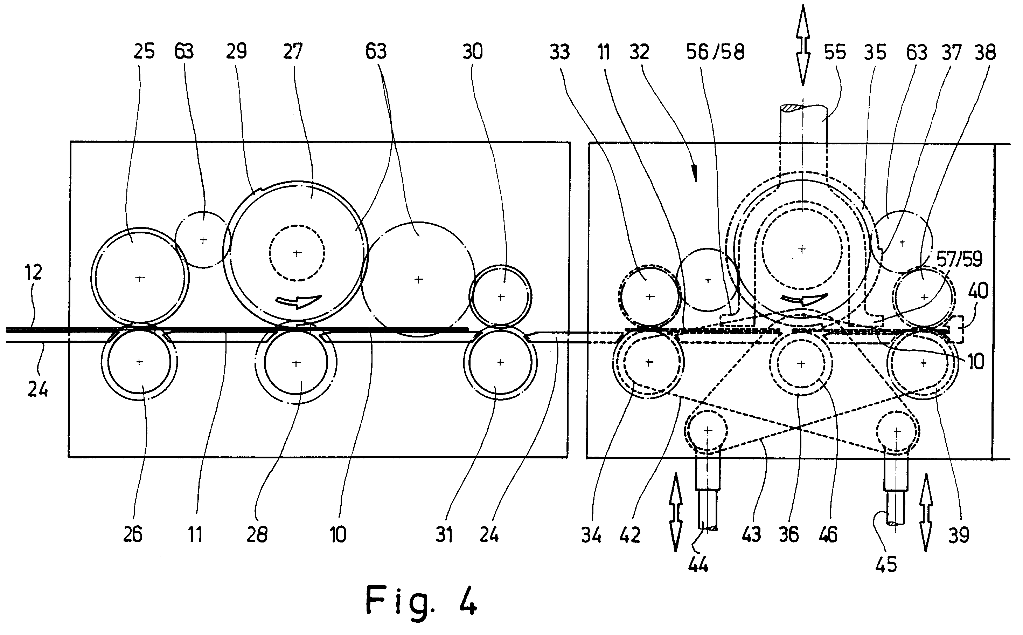

Gemäß Fig. 4 wird die Materialbahn 12 auf einer die Förderbahn 17 bildenden Transportunterlage 24 durch ein erstes Paar von Zugwalzen 25, 26 einem ersten Trennaggregat 66 der Trennstation 18 zugeführt. Die Zugwalzen 25, 26 sind (kontinuierlich) mit einer Geschwindigkeit V_{O} angetrieben.

In einem der Größe der Einheit 23 angepaßten Abstand folgt auf die Zugwalzen 25, 26 ein Paar von Reißwalzen 27, 28. Diese sind so angetrieben, daß die die Materialbahn 12 bzw. die Einheit 23 fördernde Umfangsfläche eine größere Geschwindkeit V₁ aufweist als die Zugwalzen 25, 26. Da die Materialbahn 12 durch die Zugwalzen 25, 26 auf eine Geschwindigkeit V_{O} festgelegt ist, bewirkt die höhere Geschwindigkeit der Reißwalzen 27, 28 beim Erfassen der Materialbahn 12 ein Abreißen eines Zuschnitts 10, 11 bzw. der Einheit 23. Zum Abtrennen einer Einheit 23 aus zwei noch miteinander verbundenen Zuschnitten 10, 11 ist der Abstand zwischen den Zugwalzen 25, 26 und den Reißwalzen 27, 28 derart, daß die Materialbahn 12 durch die Reißwalzen 27, 28 erst im Bereich des in Förderrichtung zweiten Zuschnitts 11 erfaßt wird.

Die Reißwalzen 27, 28 sind in besonderer Weise ausgebildet. Die untere, kleinere Reißwalze 28 dient lediglich als Gegenwalze, auf deren Umfang die Materialbahn 12 bzw. die Einheit 23 ständig aufliegt. Die größere, obere Reißwalze 27 ist längs des Umfangs mit einem Reißsegment 29 ausgebildet. Dieses über die übrige Umfangsfläche der Reißwalze 27 in Radialrichtung vorstehende Reißsegment 29 überträgt die für den Reißvorgang erforderliche Zugkraft auf die Materialbahn 12. Es liegt demnach bei einer Umdrehung der Reißwalze 27 lediglich (zeitweilig) das Reißsegment 29 an der Materialbahn an. Während der übrigen Phase, nämlich außerhalb des Reißsegments 29, wird ein Spalt zwischen den Reißwalzen 27 und 28 gebildet, der den Vorschub der Materialbahn 12 ohne Berührung mit der (oberen) Reißwalze 27 ermöglicht.

Die abgetrennte Einheit 23 wird einem nachfolgenden Paar von Förderwalzen 30, 31 zugeführt. Diese sind in einem solchen Abstand von den Reißwalzen 27, 28 angeordnet, daß die Einheit 23 erst nach dem Abtrennen durch die Reißwalzen 27, 28 erfaßt wird. Die Förderwalzen 30, 31 werden mit derselben Geschwindigkeit V₁ angetrieben wie die Reißwalzen 27, 28. Deren Reißsegment 29 ist so bemessen, daß nach dem Abtrennen der Einheit 23 diese den Förderwalzen 30, 31 zugeführt wird. Danach übernehmen die Förderwalzen 30, 31 den Weitertransport der Einheit 23.

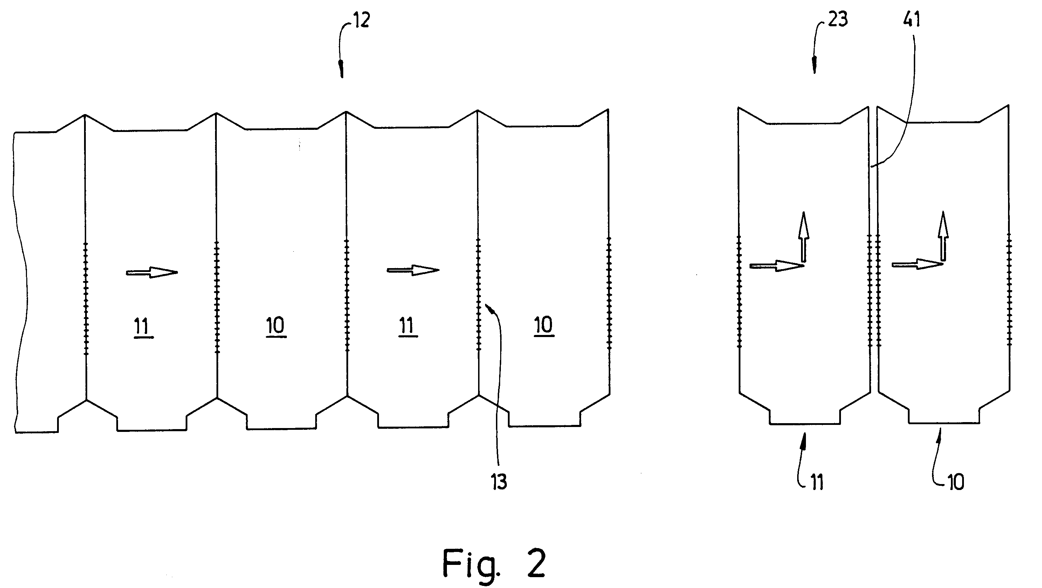

Durch die höhere Fördergeschwindigkeit der Reißwalzen 27, 28 und der Förderwalzen 30, 31 gegenüber den Zugwalzen 25, 26 wird die Einheit 23 nach dem Abtrennen sehr schnell unter Bildung eines Abstands (Fig. 2) zu der Materialbahn 12 gefördert.

Die Einheit 23 gelangt nun in den Bereich eines weiteren Trennaggregats 32 zur Trennung der Einheit 23 in die einzelnen Zuschnitte 10, 11. Das Trennaggregat 32 übernimmt die Einheit durch zwei Förderwalzen 33, 34. Diese führen die Einheit 23 einem Paar von Reißwalzen 35, 36 zu. Während die Förderwalzen 33, 34 mit der Geschwindigkeit V₁ der Förderwalzen 30, 31 angetrieben sind, haben die Reißwalzen 35, 36 eine demgegenüber höhere Geschwindigkeit V₂. Dadurch kommt auch hier die Trennung der Einheit 23 durch Reißen zustande.

Die Reißwalzen 35, 36 sind in gleicher Weise ausgebildet wie die Reißwalzen 27, 28. Die untere Reißwalze 36 ist in ihrer Position unverändert und mit relativ kleinerem Durchmesser ausgebildet. Die demgegenüber größere, obere Reißwalze 35 ist mit einem Reißsegment 37 der beschriebenen Art versehen. Der Antrieb der Reißwalze 35 ist derart, daß die Einheit 23 durch die Förderwalzen 33, 34 zwischen den Reißwalzen 35, 36 hindurchgefördert werden kann. Das Reißsegment 37 erfaßt die Einheit 23 im Bereich des vornliegenden Zuschnitts 10 und trennt diesen von dem anderen Zuschnitt 11 infolge der höheren Geschwindigkeit ab. Der abgetrennte Zuschnitt 10 wird dann von weiteren Förderwalzen 38, 39 bis an einen seitlichen Anschlag 40 gefördert. Der Zuschnitt 10 erhält dadurch einen (geringen) Abstand 41 von dem anderen Zuschnitt 11. Die beiden Zuschnitte 10, 11 befinden sich in der Position für den Transport längs der quergerichteten Zuschnittbahn 19 zu den Taschen 21, 22.

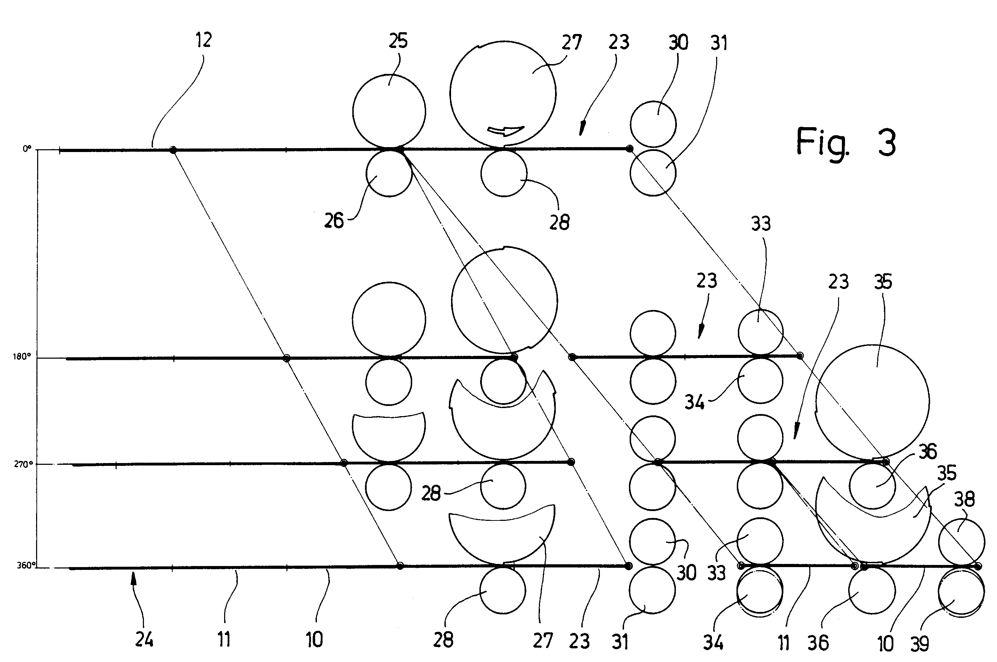

Aus dem Diagramm gemäß Fig. 3 ist der zeitliche Ablauf des geschilderten Verfahrens ersichtlich. Ein Arbeitszyklus von 360° beginnt in Moment des Erfassens der Materialbahn 12 durch das Reißsegment 29 der Reißwalze 27 zum Abtrennen der Einheit 23. Nach 180° (halber Arbeitszyklus) ist die Einheit 23 bereits durch das Trennaggregat 32 erfaßt. Die nachfolgende, zurückbleibende Materialbahn 12 wird in die Position zwischen den Reißwalzen 27, 28 gefördert.

Nach weiteren 90° (drei Viertel Arbeitszyklus) ist die Einheit 23 in den Bereich der Reißwalzen 35, 36 gefördert und wird soeben durch das Reißsegment 37 erfaßt. Nach Beendigung des Arbeitszyklus (360°) befinden sich die beiden voneinander getrennten Zuschnitte 10, 11 in der transportgerechten Position, jeweils durch die seitlichen Förderwalzen 33, 34 bzw. 38, 39 gehalten.

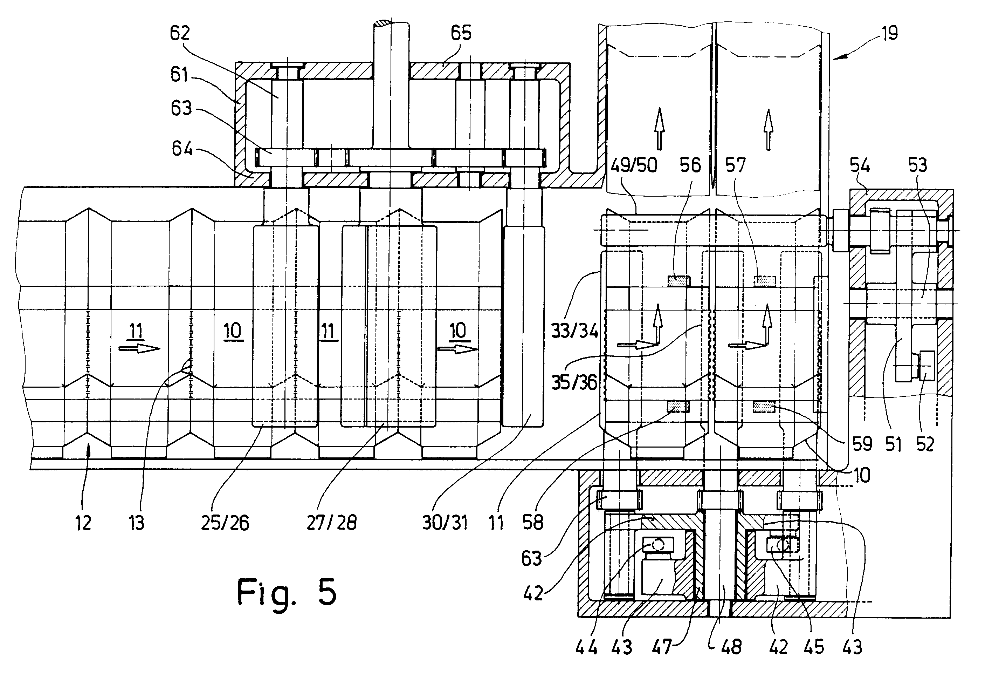

Zum Abtransport der Zuschnitte 10, 11 längs der Zuschnittbahn 19 sind die Förderwalzen 33, 34 sowie 38, 39 auseinander bewegbar. Bei dem dargestellten Ausführungsbeispiel wird zu diesen Zweck jeweils die untere Förderwalze 34 bzw. 39 nach unten bewegt, so daß die Zuschnitte 10, 11 freikommen. Die Förderwalzen 34, 39 sind zu diesem Zweck an Schwenkarmen 42, 43 gelagert, die durch Schubstangen 44, 45 betätigbar sind. Die Schwenkarme 42, 43 sind um ein gemeinsames, mittiges Schwenklager 46 bewegbar, welches konzentrisch zur Drehachse der unteren Reißwalze 36 angeordnet ist. Wie aus Fig. 5 ersichtlich, wird das Schwenklager 46 durch eine Lagerhülse 47 gebildet, die drehbar auf einer Antriebswelle 48 für die Reißwalze 36 gelagert ist.

Der Abtransport der Zuschnitte 10, 11 längs der Zuschnittbahn 19 erfolgt hier durch Abförderwalzen 49, 50. Diese sind queraxial zu den Förderwalzen 33, 34 sowie 38, 39 gerichtet. Die einseitig und auskragend gelagerten Förderwalzen 33, 34 sowie 38, 39 und die Reißwalzen 35, 36 sind in ihrer axialen Länge so bemessen, daß ein der Zuschnittbahn 19 zugekehrter Randbereich der Zuschnitte 10, 11 freibleibt. Hier, nämlich an einem für den Transport im Bereich der Zuschnittbahn 19 vorderen Teil der Zuschnitte 10, 11, kommen die quergerichteten Abförderwalzen 49, 50 zum Einsatz. Die Abförderbewegung setzt ein, sobald die Förderwalzen 33, 34 bzw. 38, 39 von den Zuschnitten 10, 11 abgehoben sind, während sich gleichzeitig das Reißsegment 37 außer Eingriff befindet.

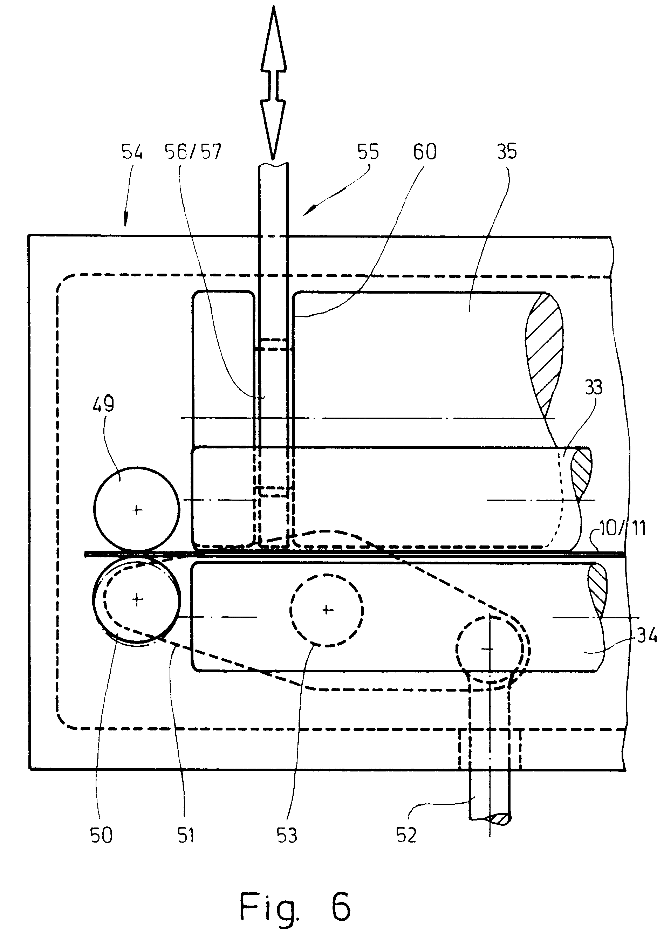

Auch die Abförderwalzen 49, 50 sind so gelagert, daß sie nur für den Abtransport der Zuschnitte 10, 11 an diesen anliegen, während der Phase der Zuförderung derselben aber einen Spalt freilassen. Wie aus Fig. 6 ersichtlich, ist zu diesem Zweck die untere Abförderwalze 50 an einem Schwenkhebel 51 gelagert, der am freien Ende durch eine Schubstange 52 betätigbar ist. Ein Schwenklager 53 für den Schwenkhebel 51 befindet sich außerhalb des Bereichs der Förderbahn 17 und der Zuschnittbahn 19 in einem gesonderten Getriebegehäuse 54.

Zur zusätzlichen Fixierung der Zuschnitte 10, 11 nach deren Trennung im Bereich des Trennaggregats 32 sind zwei Niederhalter 55 vorgesehen, die mit gabelförmigen Stützarmen 56, 57 bzw. 58, 59 auf die Zuschnitte 10, 11 nach der Trennung abgesenkt werden, derart, daß jeder Zuschnitt 10, 11 durch zwei im Abstand voneinander liegende Stützarme 56..59 nach unten gedrückt wird auf die Transportunterlage 24. Die Niederhalter 55 werden wieder angehoben, sobald der Abtransport der Zuschnitte 10, 11 beginnt. Wie aus Fig. 6 ersichtlich, liegen die Stützarme 56..59 zu beiden Seiten der (oberen) Reißwalze 35. Diese ist mit einer ringförmigen Vertiefung 60 jeweils im Bereich der Niederhalter 55 versehen. Diese treten in die Vertiefung 60 ein, ohne daß dadurch die Drehbewegung der Reißwalze 35 beeinträchtigt ist.

Die Zugwalzen 25, 26, die Reißwalzen 27, 28 und die Förderwalzen 30, 31 sind einseitig, frei auskragend gelagert, und zwar in bzw. an einem gemeinsamen Getriebegehäuse 61. Antriebswellen 62 sind durch Zahnräder 63 getrieblich miteinander verbunden. Die freien Enden der Antriebswellen 62 sind in einer vorderen Gehäusewand 64 und einer rückseitigen Gehäusewand 65 drehbar gelagert und damit ausreichend gestützt.

In analoger Weise ist die Anordnung im Bereich der Förderwalzen 33, 34 bzw. 38, 39 und der Reißwalzen 35, 36 gewählt, wobei das Getriebegehäuse 54 winkelförmig ausgebildet ist und sich bis zu den vorgenannten Walzen erstreckt.

## Patentansprüche

1. Verfahren zum Herstellen von Packungs-Zuschnitten durch Abreißen von einer Materialbahn (12) und Zuführen derselben zu einem Faltrevolver (20) einer Verpackungmaschine, wobei die Zuschnitte nacheinander durch Zugkraft von der Materialbahn (12) in Längsrichtung derselben abgerissen werden und die Materialbahn (12) mit Perforationen oder dergleichen zur Definition der Zuschnitte versehen ist, mit folgenden Merkmale:
- zum gleichzeitigen Herstellen von mehreren, insbesondere zwei Zuschnitten (10, 11), werden diese als Einheit (23) von der Materialbahn (12) abgetrennt, wobei die einzelnen Zuschnitte der Einheit in Längsrichtung der Materialbahn (12) aufeinanderfolgen,
- danach wird die Einheit (23) in Längsrichtung der Materialbahn (12) weitergefördert und schließlich in die einzelnen Zuschnitte getrennt.

2. Verfahren nach Anspruch 1, **dadurch gekennzeichnet,** daß nach dem Trennen der Einheit (23) in die einzelnen Zuschnitte (10, 11) letztere einer Doppelbahn (19) zugeführt und längs dieser dem Faltrevolver (20) zugefördert werden.

3. Verfahren nach Anspruch 1 oder 2, dadurch gekennzeichnet, daß die Zuschnitte (10, 11) nach dem Abtrennen in der Ebene der Materialbahn (12), jedoch quer zur Förderrichtung derselben, dem Faltrevolver (20) unmittelbar zugeführt werden.

4. Vorrichtung zum Herstellen von Packungs-Zuschnitten durch Abreißen von einer Materialbahn und Zuführen zu einem Förder- bzw. Faltaggregat, insbesondere einem Faltrevolver, wobei die Zuschnitte nacheinander durch Paare von Zugwalzen bzw. Förderwalzen und Reißwalzen unterschiedlicher Fördergeschwindigkeit von der Materialbahn (12) in deren Längsrichtung abreißbar sind und die Materialbahn (12) mit Perforationen oder dergleichen zur Definition der Zuschnitte versehen ist, mit folgenden Merkmale:
- an ein Paar von Zugwalzen (25,26) zum Vorschub der Materialbahn (12) schließt ein mit höherer Geschwindigkeit umlaufendes erstes Paar von Reißwalzen (27, 28) zum Abreißen einer aus zwei in Längrichtung der Materialbahn aufeinanderfolgenden Zuschnitten (10, 11) bestehenden Einheit (23) an,
- an das erste Paar Reißwalzen (27, 28) schließen Förderwalzen (30, 31) zum Weitertransport der Einheit (23) in Längsrichtung der Materialbahn (12) an,
- an die Förderwalzen (30, 31) schließt ein weiteres Trennaggregat an, das jede Einheit (23) in einzelne Zuschnitte zertrennt, und zwar wiederum in Längsrichtung der Materialbahn (12).

5. Vorrichtung nach 4, dadurch gekennzeichnet, daß die Reißwalzen (27, 28) zum Abtennen der Einheit (23) die Materialbahn (12) im Bereich des zweiten Zuschnitts (11) der aus zwei Zuschnitten (10, 11) bestehenden Einheit (23) erfaßt.

6. Vorrichtung nach Anspruch 4 oder 5, dadurch gekennzeichnet, daß die Förderwalzen (30, 31) mit derselben Geschwindigkeit angetrieben sind wie die vorangehenden Reißwalzen (27, 28).

7. Vorrichtung nach Anspruch 4 sowie einem oder mehreren der weiteren Ansprüche, dadurch gekennzeichnet, daß das weitere Trennaggregat (32) eintrittseitig aus einem Paar Förderwalzen (33, 34) und nachfolgend einem mit höherer Geschwindigkeit angetriebenen Paar Reißwalzen (35, 36) besteht, wobei die Reißwalzen (35, 36) die Einheit (23) zum Trennen derselben im Bereich des in Förderrichtung vornliegenden Zuschnitts (10) erfassen.

8. Vorrichtung nach Anspruch 4 sowie einem oder mehreren der weiteren Ansprüche, dadurch gekennzeichnet, daß die Reißwalzen (27, 28; 35, 36) am Umfang mit einem in Radialrichtung vorstehenden Reißsegment (29, 37) versehen sind; welches die Materialbahn (12) bzw. die Einheit (23) zur Ausübung einer Zugkraft zusammen mit einer Gegenwalze erfassen, wobei außerhalb des Bereichs der Reißsegmente (29, 37) zwischen den Reißwlzen (27, 28; 35, 36) ein Spalt für den Durchtritt der Mateialbahn (12) bzw. der Einheit (23) gebildet ist.

9. Vorrichtung nach Anspruch 7 sowie einem oder mehreren der weiteren Anprüche, dadurch gekennzeichnet, daß von den im weiteren Trennaggregat (32) gebildeten Zuschnitten (10, 11) der in Förderrichtung vornliegende Zuschnitt (10) durch die Reißwalzen (35, 36) bzw. ein anschließendes paar Förderwalzen (38, 39) gegen einen Anschlag (40) förderbar ist, derart, daß zwischen den beiden Zuschnitten (10, 11) ein für die Weiterverarbeitung, insbesondere für die Förderung innerhalb der Zuschnittbahn (19), erforderlicher Abstand (41) gebildet ist.

10. Vorrichtung nach Anspruch 4 sowie einem oder mehreren der weiteren Ansprüche, dadurch gekennzeichnet, daß die abgetrennten Zuschnitte (10, 11) am Ende der Förderbahn (17) einzeln oder paarweise durch einen Querförderer in die quer zur Förderbahn (17) gerichtete Zuschnittbahn (19) einförderbar sind, insbesondere durch ein Paar von Abförderwalzen (49, 50) mit Achsen quer zu den Achsen der Förderwalzen (33, 34) und Reißwalzen (35, 36).

11. Vorrichtung nach Anspruch 9 oder 10, dadurch gekennzeichnet, daß die Förderwalzen (33, 34 bzw. 38, 39) im Bereich des weiteren Trennaggregats (32) zum Abfördern der Zuschnitte (10, 11) in die Zuschnittbahn (19) auseinanderbewegbar sind, insbesondere durch Abwärtsbewegen der jeweils unteren Förderwalzen (34, 39).

12. Vorrichtung nach Anspruch 10 sowie einem oder mehreren der weiteren Ansprüche, dadurch gekennzeichnet, daß die quergerichteten Abförderwalzen (49, 50) den Zuschnitt bzw. die Zuschnitte (10, 11) im Bereich eines freien Vorderteils - bezogen auf die Förderrichtung - in der Zuschnittbahn (19) erfassen, wobei die Zuschnitte zum Einfördern in das weitere Trennaggregat (32) auseinander bewegbar sind.

13. Vorrichtung nach Anspruch 4 sowie einem oder mehreren der weiteren Ansprüche, dadurch gekennzeichnet, daß die Zuschnitte (10, 11) nach dem Abtrennen, insbesondere im Bereich des weiteren Trennaggregats (32), also vor dem Eintritt in die Zuschnittbahn (19), in ihrer Position fixiert sind, insbesondere durch wenigstens einen auf- und abbewegbaren Niederhalter (55) mit Stützarmen (56, 57; 58, 59).

## Claims

1. Process for producing pack blanks by tearing off from a web of material (12) and feeding them to a folding turret (20) of a packaging machine, the blanks being torn off from the web of material (12) in succession in the longitudinal direction of the latter as a result of tensile force and the web of material (12) being provided with perforations or the like to define the blanks, with the following features:
- for the simultaneous production of a plurality of, especially two blanks (10, 11), these are severed as a unit (23) from the web of material (12), the individual blanks of the unit succeeding one another in the longitudinal direction of the web of material (12),
- the unit (23) is thereafter conveyed further in the longitudinal direction of the web of material (12) and is finally separated into the individual blanks.

2. Process according to Claim 1, characterized in that, after the unit (23) has been separated into the individual blanks (10, 11), the latter are fed to a double track (19) and are conveyed along this to the folding turret (20).

3. Process according to Claim 1 or 2, characterized in that the blanks (10, 11), after being separated in the plane of the web of material (12), but transversely to the conveying direction of the latter, are fed directly to the folding turret (20).

4. Apparatus for producing pack blanks by tearing off from a web of material and feeding them to a conveying or folding unit, especially to a folding turret, the blanks being tearable off from the web of material (12) in its longitudinal direction in succession by means of pairs of drawing rollers or conveying rollers and tearing rollers of differing conveying speed, and the web of material (12) being provided with perforations or the like to define the blanks, with the following features:
- a pair of drawing rollers (25, 26) for advancing the web of material (12) is followed by a first pair of tearing rollers (27, 28), rotating at a higher speed, for tearing off a unit (23) consisting of two blanks (10, 11) succeeding one another in the longitudinal direction of the web of material,
- the first pair of tearing rollers (27, 28) is followed by conveying rollers (30, 31) for transporting the unit (23) further in the longitudinal direction of the web of material (12),
- the conveying rollers (30, 31) are followed by a further separating unit which separates each unit (23) into individual blanks, specifically once again in the longitudinal direction of the web of material (12).

5. Apparatus according to Claim 4, characterized in that the tearing rollers (27, 28) for severing the unit (23) from the web of material (12) grasp the latter in the region of the second blank (11) of the unit (23) consisting of two blanks (10, 11).

6. Apparatus according to Claim 4 and 5, characterized in that the conveying rollers (30, 31) are driven at the same speed as the preceding tearing rollers (27, 28).

7. Apparatus according to Claim 4 and one or more of the further claims, characterized in that the further severing set (32) consists, on the entry side, of a pair of conveying rollers (33, 34) and thereafter a pair of tearing rollers (35, 36) driven at a higher speed, the tearing rollers (35, 36) grasping the unit (23) in the region of the blank (10) leading in the conveying direction in order to divide the unit (23).

8. Apparatus according to Claim 4 and one or more of the further claims, characterized in that the tearing rollers (27, 28; 35, 36) are equipped, on the circumference, with respective radially projecting tearing segments (29, 37) which grasp the web of material (12) or the unit (23) respectively in order to exert a tensile force together with a mating roller, a gap for the passage of the web of material (12) and of the unit (23) respectively being formed between the tearing rollers (27, 28; 35, 36) outside the region of the tearing segments (29, 37).

9. Apparatus according to Claim 7 or one or more of the further claims, characterized in that, of the blanks (10, 11) formed in the further severing set (32), the blank (10) leading in the conveying direction can be conveyed against a stop (40) by the tearing rollers (35, 36) or an adjacent pair of conveying rollers (38, 39) in such a way that a distance (41) necessary for further processing, especially for conveyance within the blank track (19), is formed between the two blanks (10, 11).

10. Apparatus according to Claim 4 and one or more of the further claims, characterized in that, at the end of the conveying track (17), the severed blanks (10, 11) can be conveyed individually or in pairs by a cross-conveyor into the blank track (19) directed transversely relative to the conveying track (17), especially by a pair of discharge rollers (49, 50) with axes transverse relative to the axes of the conveying rollers (33, 34) and tearing rollers (35, 36).

11. Apparatus according to Claim 9 or 10, characterized in that the conveying rollers (33, 34 and 38, 39) can be moved apart from one another in the region of the further severing set (32) for discharging the blanks (10, 11) into the blank track (19), especially as a result of a downward movement of the respective lower conveying rollers (34, 39).

12. Apparatus according to Claim 10 and one or more of the further claims, characterized in that the transversely directed discharge rollers (49, 50) grasp the blank or blanks (10, 11) in the region of a free front part - relative to the conveying direction - in the blank track (19), the blanks being movable apart from one another for conveyance into the further severing set (32).

13. Apparatus according to Claim 4 and one or more of the further claims, characterized in that the blanks (10, 11), after being severed, are fixed in position especially in the region of the further severing set (32), that is to say before entering the blank track (19), especially by means of at least one holding-down device (55) movable up and down and having supporting arms (56, 57; 58, 59).

## Revendications

1. Procédé de fabrication de flans pour emballage par déchirement à partir d'une bande de matériau (12) et amenée de ceux-ci à un revolver de pliage (20) d'une machine d'emballage, les flans étant déchirés les uns après les autres par la force de traction exercée pour les séparer de la bande de matériau (12), en agissant dans la direction longitudinale de celle-ci, et la bande de matériau (12) étant pourvue de perforations ou analogues pour la définition des flans, le procédé présentant les caractéristiques ci-après :
- pour une fabrication simultanée de plusieurs flans (10, 11), en particulier de deux flans, ceux-ci sont séparés, sous forme d'ensembles (23), de la bande de matériau (12), les flans individuels de l'ensemble se suivant dans la direction longitudinale de la bande de matériau (12),
- ensuite, le transport de l'ensemble (23) est continué dans la direction longitudinale de la bande de matériau (12) et enfin est effectuée la séparation donnant les flans individuels.

2. Procédé selon la revendication 1, caractérisé en ce que, après séparation de l'ensemble (23) en flans (10, 11) individuels, ces derniers sont amenés à une bande double (19) et amenés le long de celle-ci au revolver de pliage (20).

3. Procédé selon la revendication 1 ou 2, caractérisé en ce que les flans (10, 11) après séparation, sont amenés directement dans le plan de la bande de matériau (12) au revolver de pliage (20), l'amenée se faisant cependant transversalement par rapport à la direction de transport.

4. Dispositif de fabrication de flans pour emballage par déchirement à partir d'une bande de matériau et amenée à un groupe de transport respectivement de pliage, en particulier à un revolver de pliage, les flans étant susceptibles d'être séparés par déchirement de la bande de matériau (12), dans sa direction longitudinale, les uns après les autres, au moyen de paires de rouleaux tracteurs ou de rouleaux de transport et de rouleaux de déchirement ayant des vitesses de transport différentes, et la bande de matériau (12) étant pourvue de perforations ou analogues pour assurer la définition des flans, présentant les caractéristiques ci-après,
- une première paire de rouleaux de déchirement (27, 28) destinés à effectuer le déchirement d'un ensemble (23) composé de deux flans (10, 11) se suivant dans la direction longitudinale de la bande de matériau (12) tournant, avec une vitesse supérieure, en suivant une paire de rouleaux tracteurs (25, 26) destinés à produire l'avancement de la bande de matériau (12),
- des rouleaux de transport (30, 31) destinés à la continuation du transport de l'ensemble (23) dans la direction longitudinale de la bande de matériau (12), se raccordent à la première paire de rouleaux de déchirement (27, 28),
- un groupe de séparation supplémentaire, assurant la séparation de chaque ensemble (23) en flans individuels et notamment le mouvement se faisant de nouveau dans la direction longitudinale de la bande de matériau (12), étant raccordé aux rouleaux de transport (30, 31).

5. Dispositif selon la revendication 4, caractérisé en ce que les rouleaux de déchirement (27, 28) destinés à la séparation de l'ensemble (23) saisissent la bande de matériau (12) dans la zone du deuxième flan (11) de l'ensemble (23) composé de deux flans (10, 11).

6. Dispositif selon la revendication 4 ou 5, caractérisé en ce que les rouleaux de transport (30, 31) sont entraînés à la même vitesse que les rouleaux de déchirement (27, 28) les précédant.

7. Dispositif selon la revendication 4 ainsi que selon l'une ou plusieurs des autres revendications, caractérisé en ce que le groupe de séparation (32) supplémentaire est composé, côté entrée, d'une paire de rouleaux de transport (33, 34) et, ensuite, d'une paire de rouleaux de déchirement (35, 36) entraînés à vitesse élevée, les rouleaux de déchirement (35, 36) saisissant l'ensemble (23) pour en assurer la séparation, dans la zone du flan (10) se trouvant à l'avant dans la direction de transport.

8. Dispositif selon la revendication 4, ainsi que selon une ou plusieurs des autres revendications, caractérisé en ce que les rouleaux de déchirement (27, 28 ; 35, 36) sont pourvus, à la périphérie, d'un segment de déchirement (29, 37) faisant salle en direction radiale et saisissant, conjointement avec un rouleau conjugué, la bande de matériau (12), ou l'ensemble (23), pour exercer une force de traction, un interstice destiné au passage de la bande de matériau (12) ou de l'ensemble (23) étant constitué entre les rouleaux de déchirement (27, 28 ; 35, 36).

9. Dispositif selon la revendication 7, ainsi qu'une ou plusieurs des autres revendications, caractérisé en ce que des flans (10, 11) constitués dans le groupe de séparation (32) supplémentaire, le flan (10) se trouvant à l'avant dans la direction de transport est susceptible d'être transporté par les rouleaux de déchirement (35, 36) ou une paire s'y raccordant de rouleaux de transport (38, 39) contre une butée (40), de manière qu'entre les deux flans (10, 11) soit constitué un espacement (41) nécessaire pour la continuation du traitement, en particulier pour le transport à l'intérieur de la bande à flans (19).

10. Dispositif selon la revendication 4, ainsi que selon l'une ou plusieurs des autres revendications, caractérisé en ce que les flans (10, 11) ayant été séparés peuvent être transportés pour introduction, à l'extrémité de la bande de transport (17), individuellement ou par paires, au moyen d'un transporteur transversal, dans la bande à flans (19) orientée transversalement par rapport à la bande de transport (17), en particulier au moyen d'une paire de rouleaux transporteurs d'évacuation (49, 50) ayant des axes orientés transversalement par rapport aux axes des rouleaux de transport (33, 34) et des rouleaux de déchirement (35, 36).

11. Dispositif selon la revendication 9 ou 10, caractérisé en ce que les rouleaux de transport (33, 34), respectivement (38, 39), sont déplaçables dans le sens d'un écartement, dans la zone du groupe de séparation (32) supplémentaire, pour assurer le transport d'évacuation des flans (10, 11) dans la bande à flans (19), en particulier par un déplacement de descente des rouleaux de transport (34, 39) respectivement situés en position inférieure.

12. Dispositif selon la revendication 10, ainsi que selon l'une ou plusieurs des autres revendications, caractérisé en ce que les rouleaux transporteurs d'évacuation (49, 50) orientés transversalement saisissent le flan ou les flans (10, 11) dans la zone d'une partie avant libre - en observant dans la direction de transport - dans la bande à flans (19), les flans étant susceptibles d'être écartés l'un de l'autre pour le transporteur d'introduction dans le groupe de séparation (32) supplémentaire.

13. Dispositif selon la revendication 4, ainsi que selon l'une ou plusieurs des autres revendications, caractérisé en ce que les flans (10, 11) sont fixés en position après séparation, en particulier dans la zone du groupe de séparation (32) supplémentaire, donc avant entrée dans la bande à flans (19), en particulier au moyen d'au moins un dispositif de maintien (55) susceptible d'être levé et abaissé et équipé de bras d'appui (56, 57 ; 58, 59).
